# EUROPÄISCHE PATENTANMELDUNG

(11) **EP 1 091 472 A2**
(43) Veröffentlichungstag der Anmeldung: **11.04.2001**
(21) Anmeldenummer: 00119706.0
(22) Anmeldetag: 09.09.2000
(51) Int. Cl.: H02K 7/14, F04D 13/06

(54) **Elektrokraftstoffpumpe sowie Pumpenwerk für eine Kraftstoffpumpe**

(30) Priorität: 07.10.1999 DE 19948171
(71) Anmelder: Kautex Textron GmbH & Co. KG., 53229 Bonn (DE)
(72) Erfinder: Gebert, Klaus, 47877 Willich (DE)
(74) Vertreter: Patentanwälte Lippert, Stachow, Schmidt & Partner

(57) **Zusammenfassung**

Die Erfindung betrifft eine Elektrokraftstoffpumpe mit wenigstens einem als Seitenkanalpumpenwerk ausgebildeten Pumpenwerk und einem das Pumpenwerk antreibenden Gleichstrommotor. Als Gleichstrommotor ist ein elektronisch kommutierter Motor mit einem dauermagnetischem Läufer vorgesehen. Die Pumpe gemäß der Erfindung zeichnet sich dadurch aus, daß das Pumpengehäuse von Teilen des Stators teilweise durchdringbar ausgebildet ist, wobei das Pumpenwerk und der Gleichstrommotor jeweils separate Baugruppen bilden und das Pumpenwerk eine separate Baugruppe bildet, die lösbar mit dem Gleichstrommotor verbindbar ist.

## Beschreibung

Die Erfindung betrifft eine Elektrokraftstoffpumpe mit wenigstens einem Pumpenwerk, das vorzugsweise als Seitenkanalpumpenwerk ausgebildet ist, mit einem das Pumpenwerk antreibenden elektronisch kommutierten Gleichstrommotor, mit einem Pumpengehäuse, mit wenigstens einem Einlaß, wenigstens einem Auslaß und mit wenigstens einem in dem Pumpengehäuse drehbar gelagerten Laufrad, welches gleichzeitig den Läufer des Gleichstrommotors bildet.

Kraftstoffpumpen sind im allgemeinen als einstufige oder zweistufige Konstruktionen entweder als Verdrängerpumpen oder als Strömungspumpen bekannt, wobei das Pumpenwerk in der Regel über einen Gleichstrommotor angetrieben wird. Das Pumpenwerk und der Elektromotor sind in einem Gehäuse mit Einlaß und Auslaß zusammengefaßt, wobei das Pumpenwerk den Kraftstoff durch den Einlaß ansaugt und durch den Gleichstrommotor zum Auslaß pumpt. Der Motor wird dabei durch den Kraftstoff gekühlt. Bei den üblicherweise verwendeten Gleichstrommotoren handelt es sich um mit Dauermagneten fremderregte Gleichstrommotoren, die entweder mit 12 V oder 24 V Spannung versorgt werden. Als Pumpenwerke finden beispielsweise Zahnring-, Seitenkanal-, Peripheralkanal-, Flügelzellen- bzw. Rollenzellen- und Schraubenpumpenwerke Anwendung.

Die bekannten Kraftstoffpumpen benötigen verhältnismäßig viel Bauvolumen, insbesondere Bauhöhe. Grundsätzlich sollten aber die Abmaße einer Elektrokraftstoffpumpe möglichst klein sein, damit eine kompakte und platzsparende Zusammenfügung der Komponenten der sogenannten Tankeinbaueinheit gewährleistet ist. Als Tankeinbaueinheit wird im allgemeinen eine Kraftstoff-Fördereinheit bezeichnet, die alle für eine sichere Kraftstoffversorgung des Motors notwendigen Komponenten umfaßt. Die Abmessungen einer Kraftstoffpumpe lassen sich begrenzt durch die Wahl kleinerer Pumpendurchmesser verringern. Eine Verringerung des Pumpendurchmessers geht jedoch einher mit höheren Pumpendrehzahlen, die zum Erreichen der gleichen Förderleistung erforderlich sind. Hohe Drehzahlen bedeuten jedoch höhere thermische und mechanische Belastung für Motor- und Pumpenteil sowie höhere akustische Emissionen. Deshalb ist eine Minimierung der Abmessungen einer Kraftstoffpumpe teilweise nur auf Kosten von deren Robustheit und Langlebigkeit zu realisieren.

Andererseits ist eine Reduzierung der Abmessungen von Kraftstoffpumpen aufgrund der äußeren Kontur des Tanks oftmals wünschenswert. Insbesondere bei Verwendung blasgeformter Kunststofftanks ergibt sich eine besondere Flexibilität bei deren Formgebung. Durch unterschiedliche Einbauorte im Fahrzeug ergeben sich sehr verschiedene Behälterbauformen, die allerdings im Tank befindliche Einbauten berücksichtigen müssen. Insoweit kommt den Abmessungen einer Kraftstoffpumpe besondere Bedeutung zu.

Zur Reduzierung der Bauhöhe von Kraftstoffpumpen sowie zur Verringerung der Anzahl beweglicher Teile solcher Elektrokraftstoffpumpen ist es bekannt, das Laufrad der Pumpe gleichzeitig als Rotor des Elektromotors auszubilden. Eine solche Elektrokraftstoffpumpe ist beispielsweise aus JP 63-120888 A, Patent Abstracts of Japan, M-748, 1988, Vol. 12, No. 371, bekannt. Bei dieser bekannten Elektrokraftstoffpumpe ist das Laufrad der Pumpe bzw. der Rotor mit einer Vielzahl von Wicklungen durchzogen, die in bekannter Art und Weise über eine Bürste und einen Stromwender bzw. Kommutator unter Spannung gesetzt werden.

Eine solche Elektrokraftstoffpumpe ist beispielsweise auch aus der DE 43 41 564 A1 bekannt.

Eine ähnliche Elektrokraftstoffpumpe ist aus der DE-OS 20 12 560 bekannt. Bei dieser Kraftstoffpumpe ist der Rotor als permanentmagnetischer Rotor ausgebildet, der Gleichstrommotor ist bürstenlos mit magnetgesteuertem Außenkommutator ausgebildet. Die Verwendung eines bürstenlosen Gleichstrommotors wird in dieser Druckschrift unter Sicherheits- und Verschleißgesichtspunkten vorgeschlagen, gleichwohl liegt auf der Hand, daß bei Weglassung des sonst üblichen Stromwenders mit Bürsten zusätzlich an axialer Bauhöhe gespart wird.

Eine Kraftstoffpumpe der eingangs genannten Art ist beispielsweise aus der DE 197 52 884.8 bekannt. Bei dieser Elektrokraftstoffpumpe ist zur Erzielung einer extrem flachen Bauweise in Achsrichtung der Elektromotor ebenfalls bürstenlos ausgebildet und sein Rotor wird vom Laufrad der Förderpumpe gebildet. Das Laufrad ist in einer zylinderförmigen Pumpenkammer mit sich radial erstreckenden, voneinander axial beabstandeten Seitenwänden und einer die beiden Seitenwände längs deren kreisförmigen Peripherie miteinander verbindenden umfänglichen Wandung begrenzt. Das Laufrad liegt jeweils mit kleinstem Spaltabstand den Seitenwänden gegenüber, und die Innenfläche eines von einem genuteten Blechpaket gebildeten Stators bildet die umfängliche Wandung der Pumpenkammer. Das Pumpenwerk dieser bekannten Pumpe ist als Seitenkanalpumpenwerk ausgebildet, die beiden voneinander axial beabstandeten Seitenwände sind jeweils mit zum Pumpenraum hin offenen, nutartigen Seitenkanälen versehen, die konzentrisch zur Laufradachse verlaufen.

Die Lösung ist hinsichtlich der geforderten geringen axialen Bauhöhe vorteilhaft. Der sich durch diese Bauweise vergrößernde Außendurchmesser der Elektrokraftstoffpumpe ist darüber hinaus hinsichtlich der Verbesserung des Wirkungsgrads der Kraftstoffpumpe vorteilhaft.

Allerdings ist die Herstellung des Pumpengehäuses außerordentlich aufwendig und kostspielig, da das Pumpengehäuse teilweise sowohl den Stator als auch teilweise die Strömungskanäle der Seitenkanalpumpe ausbildet. Insbesondere die aufeinanderliegenden Flächen des Laufrads und der die Seitenkanäle ausbildenden Teile des Pumpengehäuses, d. h. die Gehäusegleitflächen, müssen mit größtmöglicher Ebenheit und geringstmöglicher Rauhtiefe ausgeführt sein, um das Axialspiel der Pumpe und somit etwaige Leckageverluste zu minimieren. Bei der integralen Ausbildung von hydraulisch wirksamen Teilen des Pumpengehäuses und dem Stator des Elektromotors ist deren Oberflächenbehandlung aufgrund der komplexen Kontur des Bauteils außerordentlich aufwendig.

Der Erfindung liegt daher die Aufgabe zugrunde, eine Elektrokraftstoffpumpe der eingangs genannten Art unter Beibehaltung der Vorzüge einer axial, d. h. in Richtung der Laufradachse, flachen Bauweise konstruktiv zu verbessern.

Die Aufgabe wird dadurch gelöst, daß das Pumpengehäuse von Teilen des Stators teilweise durchdringbar ausgebildet ist. Hierdurch ergibt sich eine konstruktive Trennung zwischen dem Gleichstrommotor und dem Pumpengehäuse, welches separat gefertigt werden kann und somit vom Aufbau in Hinblick auf die geforderte Oberflächengüte der Gleitflächen optimiert sein kann. Eine solche Ausbildung der Elektrokraftstoffpumpe gemäß der Erfindung bietet zudem den Vorteil, den Gleichstrommotor und das Pumpenwerk als voneinander trennbare Einheiten zur Verfügung zu stellen.

Gemäß der bevorzugten Ausführungsform der Elektrokraftstoffpumpe weist das Pumpenwerk, vorzugsweise druckseitig, eine Vielzahl peripherer Durchbrechungen auf, die in bezug auf das Laufrad so angeordnet sind, daß sie ein Eintauchen magnetisch permeabler Fortsätze des Stators in das Pumpengehäuse derart erlauben, daß ein magnetisch wirksamer Spalt zwischen dem Laufrad und den Statorfortsätzen gebildet wird. Auf diese Art und Weise ist sowohl eine Führung des magnetischen Flusses in Form einer Radialspaltanordnung als auch des Kraftstoffstroms gewährleistet. Es ist für den Fachmann selbstverständlich, daß der Gleichstrommotor auch zu dessen Kühlung kraftstoffdurchströmt ist. Die konstruktive Zusammenfassung von Pumpenlaufrad und Rotor wird durch die teilweise Durchdringung von Stator und Pumpengehäuse gelöst, wobei der Stator und das Pumpengehäuse separate Bauelemente bilden.

Die Statorfortsätze erstrecken sich vorzugsweise axial, d. h. parallel und konzentrisch zur Achse des Laufrads.

Ein elektronisch kommutierter Gleichstrommotor, dessen Stator wie zuvor beschrieben ausgebildet ist, ist beispielsweise aus den US-Patenten Nrn. 4,949,000; 4,837,474; 4,745,345; 5,659,217 und 5,874,796 von Petersen offenbart, auf die hier vollinhaltlich Bezug genommen wird. Ein solcher Gleichstrommotor beansprucht eine außerordentlich geringe axiale Bauhöhe, der Motor ist bürstenlos und der Läufer dieses Motors weist keine elektrischen Anschlüsse auf, so daß ein solcher Motor ideal für die Anwendung in einer Elektrokraftstoffpumpe ist. Insbesondere der in der US-PS 5,659,217 beschriebene elektronisch kommutierte Gleichstrommotor ist als Radialspaltmotor von besonders flacher Bauweise bei vergleichsweise großem Durchmesser ausgebildet.

Zweckmäßigerweise sind die Durchbrechungen kreisbogenförmig und konzentrisch zu dem Laufrad angeordnet und der Außendurchmesser dieser Anordnung ist größer als der Innendurchmesser des eingefaßten Laufrades, so daß die magnetisch permeablen Fortsätze des Stators das Pumpenlaufrad als Läufer bzw. Rotor umgreifen.

Bei einer Ausführungsform des erfindungsgemäßen Pumpenwerks ist vorgesehen, daß der Ring aus dauermagnetischem Material in bezug auf das Laufrad der Pumpe axial verschieblich gelagert ist. Eine solche lose Anordnung des Rings und des Laufrads zueinander stellt eine Montagevereinfachung dar.

Dann ist es erforderlich, wenn das Laufrad und der Ring aus dauermagnetischem Material gegeneinander unverdrehbar formschlüssig zusammenwirken.

Das Pumpengehäuse wird zweckmäßigerweise durch jeweils die Seitenkanäle ausbildende Scheiben gebildet, die über wenigstens einen Distanzring auf Abstand gegeneinander befestigt sein können. Eine solche Anordnung hat den Vorzug, daß alle Einzelteile des Pumpenwerks durch Schleif- und Läppverfahren bearbeitet werden können. Hieraus resultieren eine größere Ebenheit und eine geringere Rauhtiefe der Gehäusegleitflächen sowie eine größere Ebenheit und eine geringere Rauhtiefe des als Flügelrad ausgebildeten Laufrads. Es ergeben sich dadurch außerdem geringere Leckagen und ein besseres Förderverhalten. Schließlich ist gleichzeitig ein Kostenvorteil zu erwarten, da das Pumpengehäuse und das Laufrad nicht drehend bearbeitet werden müssen. Die zu erzielenden Fertigungstoleranzen sind insgesamt kleiner.

Anstelle eines Distanzrings können in den Scheiben Ringnuten zur Aufnahme des Magnetrings vorgesehen sein.

Die Erfindung sieht weiterhin ein Pumpenwerk für eine Kraftstoffpumpe mit einem vorzugsweise elektronisch kommutierten Gleichstrommotor vor, als Strömungspumpe mit einem mehrteiligen Pumpengehäuse mit wenigstens einem Einlaß und wenigstens einem Auslaß und wenigstens einem in dem Pumpengehäuse drehbar gelagerten Laufrad, wobei das Pumpenwerk eine separate Baugruppe bildet und lösbar mit dem Gleichstrommotor verbindbar ist. Hierdurch können der Motor einerseits und das Pumpenwerk andererseits als separat handhabbare Einheiten vorliegen, die auch separat einer Funktionsprüfung unterziehbar sind. Bislang war es üblich, Elektrokraftstoffpumpen in der Fertigung als komplette Einheit mit Motor in Ersatzkraftstoff zu prüfen. Der dabei in den Gehäusen verbleibende Restkraftstoff sorgte im weiteren Verarbeitungsprozeß, beispielsweis bei der Integration in die Fördereinheit oder in den Tank, immer wieder für Probleme. Das Pumpenwerk gemäß der Erfindung hingegen kann ohne den Motor und die zugehörige Elektronik auf Funktion überprüft werden, wobei der Restkraftstoff vor der Montage mit dem Motor aus dem Pumpengehäuse entfernbar ist.

Die Erfindung wird nachstehend anhand zweier in den Zeichnungen dargestellter Ausführungsbeispiele erläutert.

Es zeigen:
- Fig. 1: einen Längsschnitt durch die Elektrokraftstoffpumpe gemäß der Erfindung,
- Fig. 2: eine vereinfacht schematisch perspektivische Ansicht des elektronisch kommutierten Gleichstrommotors der Elektrokraftstoffpumpe,
- Fig. 3: eine schematische Explosionsansicht eines Pumpenwerks nach einer ersten Ausführungsform der Erfindung und
- Fig. 4: eine schematische Explosionsansicht eines Pumpenwerks nach einer zweiten Ausführungsform.

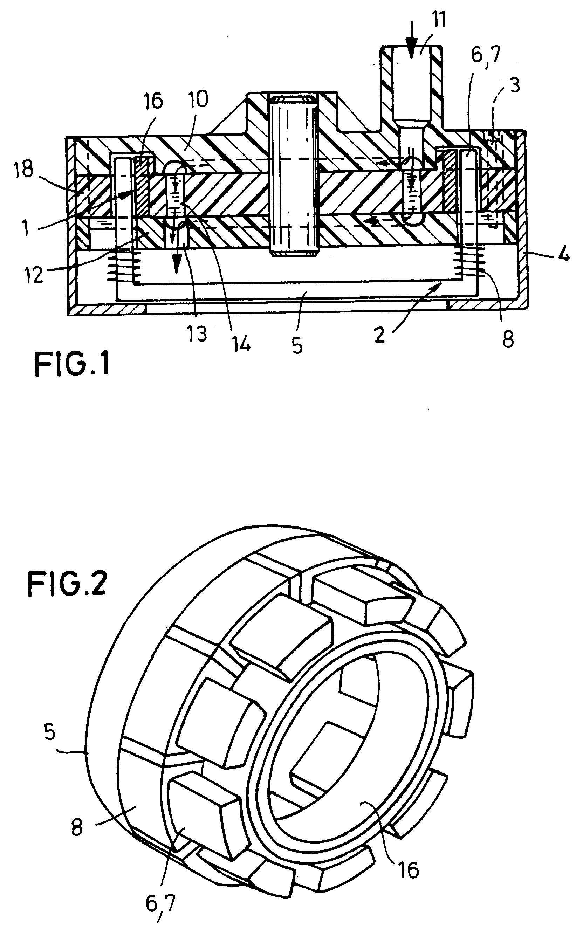

Wie insbesondere der Fig. 1 zu entnehmen ist, besteht die Elektrokraftstoffpumpe gemäß der Erfindung aus einem hydraulischen und einem elektrischen Teil, der hydraulische Teil wird durch das Pumpenwerk 1 gebildet, der elektrische Teil wird durch einen elektronisch kommutierten Gleichstrommotor gebildet, der nachstehend als Motor 2 bezeichnet ist. Der exakte Aufbau und die exakte Funktionsweise des Motors in verschiedenen Varianten sind, wie bereits vorstehend erwähnt, in den US-Patenten Nrn. 4,949,000, 4,837,474, 4,745,345, 5,659,217 und 5,874,796 von Petersen beschrieben, deren Offenbarung hier einbezogen sein soll. Das Pumpenwerk 1 und der Motor 2 sind jeweils als lösbar miteinander verbindbare Baugruppen ausgebildet, diese sind über Schrauben 3 in einem Gehäuse 4 gegeneinander befestigt.

Der Motor 2 besitzt einen mit 5 bezeichneten tellerförmigen Stator, welcher ein ringförmiges Stator-Blechpaket 6 aufweist. Das Stator-Blechpaket 6 bildet fingerartige, magnetisch permeable Fortsätze 7, die jeweils in ihrem Wurzelbereich mit Feldwicklungen 8 umgeben sind und sich axial erstrecken. Der Stator 5 und die Fortsätze 7 sind so ausgebildet, daß ein dauermagnetischer Rotor in den von den Fortsätzen 7 umrahmten Hohlraum einen Magnetspalt bildend eintauchen kann. Über die Feldwicklungen ist ein rotierendes elektromagnetisches Feld erzeugbar, welches den Rotor über einen Radialspalt treibt.

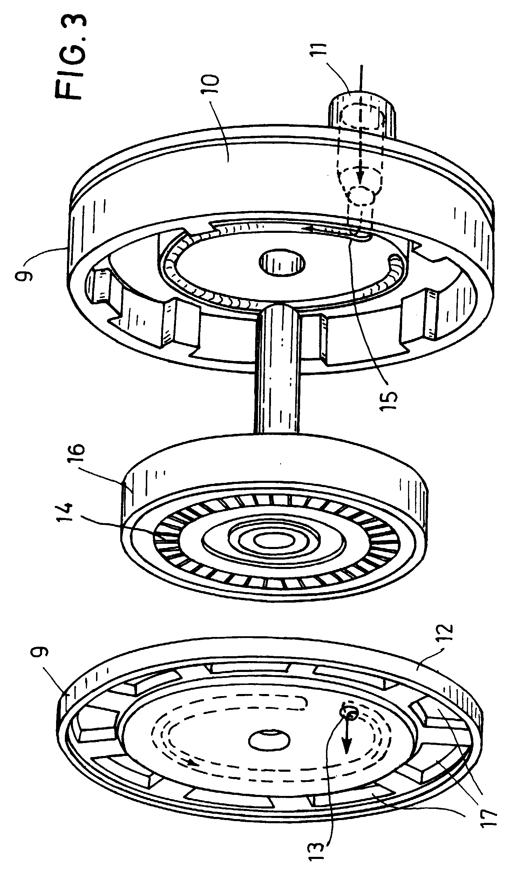

Wie beispielsweise den Fig. 1 und 3 zu entnehmen ist, ist die Elektrokraftstoffpumpe gemäß der Erfindung so konstruiert, daß die Fortsätze 7 des Stators 5 das mit 9 bezeichnete zweiteilige Pumpengehäuse teilweise durchdringen. Das gemäß Fig. 3 als zweistufiges Seitenkanalpumpenwerk ausgebildete Pumpenwerk 1 besteht aus einem ersten Gehäuselement 10 mit einem Kraftstoffeinlaß 11, einem zweiten Gehäuselement 12 mit einem Kraftstoffauslaß 13 sowie einem zwischen den Gehäuseelementen 10 und 12 drehbar gelagerten Flügelrad 14 als Pumpenlaufrad. Das Flügelrad 14 wirkt mit einem ersten Seitenkanal 15 des ersten Gehäuseelements 10 und einem zweiten, nicht dargestellten Seitenkanal in dem zweiten Gehäuseelement 12 zusammen. Die Seitenkanäle erstrecken sich etwa konzentrisch zur Achse des Flügelrades 14. Wie bereits vorstehend erwähnt, ist das in Fig. 3 dargestellte Pumpenwerk zweistufig ausgelegt. Die von dem Pumpengehäuse 9 gebildete Pumpenkammer ist naturgemäß zylindrisch ausgebildet.

Das Flügelrad 14 ist von einem Magnetring 16 mit dauermagnetischen Eigenschaften eingefaßt. Der Magnetring 16 kann aus diskret über den Umfang des Flügelrads 14 verteilt angeordneten Magneten zusammengesetzt sein, dieser kann allerdings auch einstückig aus Kunststoff mit darin inkorporierten Ferriten ausgebildet sein, die entsprechend magnetisiert sind.

Das zweite Gehäuseelement 12 ist mit peripher kreisbogenförmig angeordneten Durchbrüchen 17 versehen. Die Kontur der Durchbrüche 17 entspricht der Kontur der Fortsätze 7 des Stators 5. Die Durchbrüche sind konzentrisch bezüglich des Flügelrads 14 angeordnet und der Innendurchmesser dieser Anordnung ist geringfügig größer als der Außendurchmesser des mit dem Magnetring 16 eingefaßten Flügelrads 14, so daß die magnetisch permeablen Fortsätze 7 des Stators in das Pumpengehäuse 9, den Magnetring 16 und das Flügelrad 14 konzentrisch umgebend, eintauchen können. Die Fortsätze 7 erstecken sich axial und konzentrisch zur Achse des Flügelrades 14. Auf diese Art und Weise wird zwischen den Fortsätzen 7 und dem Magnetring 16 ein magnetisch wirksamer Spalt (Radialspalt) gebildet, so daß das Flügelrad 14 sowohl die Funktion des Pumpenlaufrads als auch des Rotors für den Motor 2 erfüllt. Diese sehr kompakte Anordnung von Pumpenwerk 1 und Motor 2 zueinander erlaubt darüber hinaus eine effektive Führung des Kraftstoffstroms, der die Feldwicklungen 8 des Stators 5 kühlend umfließt.

Die Gehäuseelemente 10 und 12 sind kreisförmig bzw. etwa scheibenförmig ausgebildet und deren Durchmesser ist selbstverständlich größer als diejenigen des Stators 5 und des Flügelrads 14.

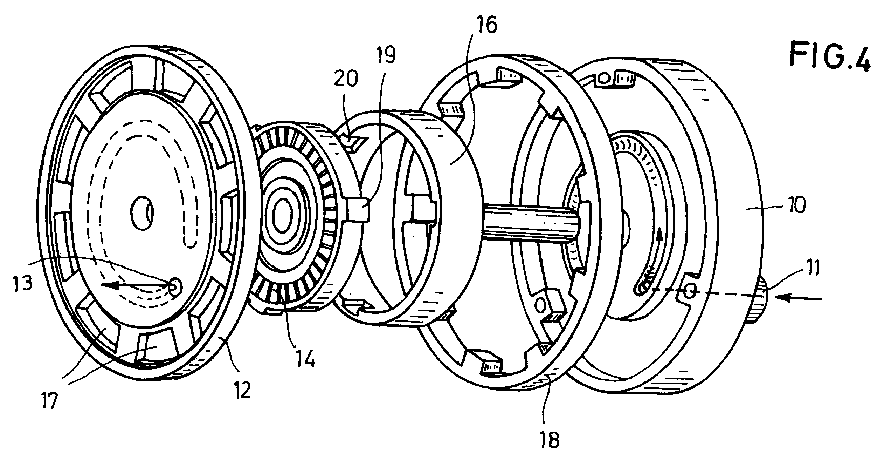

Bei der in Fig. 4 dargestellten Ausführungsform des Pumpenwerks 1 ist dieses als zweiflutiges Pumpenwerk ausgelegt. Bei zweiflutiger Auslegung des Flügelrads ist dessen Dicke deutlich geringer als die Dicke eines zweistufigen Flügelrads. Der Magnetring 16 muß jedoch eine gewisse Mindestdicke haben, um die angestrebte Leistung zu erzielen bzw. um ein entsprechend hohes Drehmoment aufbringen zu können.

Um eine fertigungstechnische Vereinfachung des Pumpenwerks 1 gemäß der Erfindung zu erzielen, sind bei der in Fig. 4 dargestellten Ausführungsform des Pumpenwerks 1 die Gehäuseelemente 10 und 12 als auch das Flügelrad 14 und ein mit 18 bezeichneter Distanzring als flache Scheiben ausgebildet. Der Magnetring 16 ist bezüglich des Flügelrads 14 schwimmend, d. h. axial verschieblich angeordnet, wobei der Magnetring 16 und das Flügelrad 14 über Mitnehmer 19 des Flügelrads 14 und entsprechende Ausnehmungen 20 des Magnetrings in Umfangsrichtung formschlüssig miteinander verbunden sind, so daß der Magnetring 16 und das Flügelrad 14 ineinander verdrehsicher, d. h. nicht gegeneinander verdrehbar, geführt sind. Um alle Bauteile bei entsprechender Tiefe des Pumpengehäuses als Scheiben ausbilden zu können, sind das erste Gehäuselement 10 und das zweite Gehäuseelement 12 über einen Distanzring 18 miteinander verschraubt. Diese Anordnung hat den Vorzug, daß alle scheibenförmigen Bauteile durch Läppen und Schleifen nachbearbeitet werden können, woraus sich eine größere Ebenheit und eine geringere Rauhtiefe der Gehäusegleitflächen ergibt. Die Ausnehmungen 20 des Magnetrings sind dabei so gewählt, daß das Laufrad 14 über die Gleitflächen des ersten Gehäuseelements 10 und des zweiten Gehäuseelements 12 in dem Magnetring 16 axial zentriert wird. Wie eingangs bereits erwähnt, hat eine solche Anordnung auch Kostenvorzüge.

Alternativ zu der in Fig. 4 dargestellten Lösung ist es möglich, den Magnetring 16 als auf das Flügelrad 14 aufschnappbares oder aufrastbares Bauteil auszubilden.

### Bezugszeichenliste

- 1: Pumpenwerk
- 2: Motor
- 3: Schrauben
- 4: Gehäuse
- 5: Stator
- 6: Statorblechpaket
- 7: Fortsätze
- 8: Feldwicklungen
- 9: Pumpengehäuse
- 10: erstes Gehäuseelement
- 11: Kraftstoffeinlaß
- 12: zweites Gehäuseelement
- 13: Kraftstoffauslaß
- 14: Flügelrad
- 15: erster Seitenkanal
- 16: Magnetring
- 17: Durchbrüche
- 18: Distanzring
- 19: Mitnehmer
- 20: Ausnehmung

## Patentansprüche

1. Elektrokraftstoffpumpe mit wenigstens einem Pumpenwerk, das vorzugsweise als Seitenkanalpumpenwerk ausgebildet ist, mit einem das Pumpenwerk antreibenden, elektronisch kommutierten Gleichstrommotor, mit einem Pumpengehäuse mit wenigstens einem Einlaß, wenigstens einem Auslaß und mit wenigstens einem in dem Pumpengehäuse drehbar gelagerten Laufrad, welches gleichzeitig den Läufer des Gleichstrommotors bildet, **dadurch gekennzeichnet**, daß das Pumpengehäuse (9) von Teilen des Stators (5) teilweise durchdringbar ausgebildet ist.

2. Elektrokraftstoffpumpe nach Anspruch 1, **dadurch gekennzeichnet**, daß das Pumpengehäuse (9), vorzugsweise druckseitig, eine Vielzahl peripherer Durchbrüche (17) aufweist, die in bezug auf das Laufrad so angeordnet sind, daß sie ein Eintauchen magnetisch permeabler Fortsätze (7) des Stators (5) in das Pumpengehäuse (9) derart erlauben, daß ein magnetisch wirksamer Spalt zwischen dem Laufrad und den Statorfortsätzen gebildet wird.

3. Elektrokraftstoffpumpe nach Anspruch 2, **dadurch gekennzeichnet**, daß sich die Fortsätze (7) des Stators (5) axial und konzentrisch zur Achse des Laufrades erstrecken.

4. Elektrokraftstoffpumpe nach einem der Ansprüche 1 bis 3, **dadurch gekennzeichnet**, daß die Durchbrüche (17) kreisbogenförmig und konzentrisch zu dem Laufrad angeordnet sind und daß der Innendurchmesser der Anordnung größer als der Außendurchmesser des eingefaßten Laufrades ist.

5. Elektrokraftstoffpumpe nach einem der Ansprüche 1 bis 4, **dadurch gekennzeichnet**, daß das Laufrad eine Einfassung aus dauermagnetischem Werkstoff aufweist.

6. Elektrokraftstoffpumpe nach einem der Ansprüche 1 bis 5, **dadurch gekennzeichnet**, daß das Laufrad von einem Ring aus dauermagnetischem Werkstoff eingefaßt ist.

7. Elektrokraftstoffpumpe nach einem der Ansprüche 1 bis 6, **dadurch gekennzeichnet**, daß der Ring aus dauermagnetischem Material bezüglich des Laufrads der Pumpe axial verschieblich gelagert ist.

8. Elektrokraftstoffpumpe nach Anspruch 7, **dadurch gekennzeichnet**, daß das Laufrad und der Ring aus dauermagnetischem Material gegeneinander unverdrehbar formschlüssig zusammenwirken.

9. Elektrokraftstoffpumpe nach einem der Ansprüche 1 bis 8, **dadurch gekennzeichnet**, daß das Pumpengehäuse (9) durch jeweils die Seitenkanäle (15) ausbildende Scheiben gebildet wird, die über wenigstens einen Distanzring (18) auf Abstand gegeneinander befestigt sind.

10. Pumpenwerk für eine Kraftstoffpumpe mit einem vorzugsweise elektronisch kommutierten Gleichstrommotor, als Strömungspumpe, mit einem mehrteiligen Pumpengehäuse mit wenigstens einem Einlaß, wenigstens einem Auslaß und wenigstens einem in dem Pumpengehäuse drehbar gelagerten Laufrad, wobei das Pumpenwerk (1) eine separate Baugruppe bildet und lösbar mit dem Gleichstrommotor verbindbar ist.

11. Pumpenwerk nach Anspruch 10 mit den Merkmalen eines der Ansprüche 2 bis 10.
